# EUROPEAN PATENT SPECIFICATION

(11) **EP 0 925 561 B1**
(45) Date of publication and mention of the grant of the patent: **12.11.2003**
(21) Application number: 97936876.8
(22) Date of filing: 15.08.1997
(51) Int. Cl.: G07F 7/08, G07F 7/02

(54) **TRANSACTION CARD**
KARTE FÜR TRANSAKTIONEN
CARTE POUR TRANSACTIONS

(30) Priority: 16.08.1996 NL 1003819; 06.09.1996 NL 1003971
(43) Date of publication of application: 30.06.1999
(73) Proprietor: Chiptec International Ltd., Willemstad, Curaçao (AN)
(72) Inventor: RAADSEN, Ferdinand, Jan, Anton, NL-3069 WP Rotterdam (NL)
(74) Representative: Visser-Luirink, Gesina, Dr.
(86) International application number: NL9700469
(87) International publication number: WO98013794

(56) References cited:
- EP-A- 0 406 841
- WO-A-91/18373
- WO-A-92/15968
- DE-U- 29 512 208
- FR-A- 2 605 770
- GB-A- 2 067 467
- US-A- 5 352 876
- US-A- 5 440 108
- PATENT ABSTRACTS OF JAPAN vol. 096, no. 009 30 September 1996 & JP 08 115 454 A (SANDENSHI KOGYO KK) 07 May 1996

## Description

The present invention concerns a transaction card representing a certain monetary purchasing value which can be exchanged for an optional product or service comprising a card-shaped body with an integrated circuit having a memory which can be read out electronically and programmed, intended, at least temporarily, to store the above-mentioned monetary value on it, in a way compatible with an existing electronic payment system.

Nowadays, gift tokens are common property and with these, two categories can be distinguished. The first category of known gift tokens is issued by certain branch organisations and can be exchanged specifically for a certain kind of product. For example, the well-known book tokens, record/CD tokens and dinner cheques, which can only be exchanged for respectively books, sound recording media or dinners at a restaurant of your choice. In addition to this, gift tokens are also issued by stores, shopping centres or organisations for the self-employed with which the gift token can be exchanged for any product from the store, shopping centre respectively the organisations for the self-employed.

In all cases, an often quite laborious and administratively costly procedure is common to steer the issuing, exchanging and cashing of the circulating gift tokens in the right direction. For this purpose, almost always considerable administrative costs for cashing the token are charged. Thus, in the Netherlands for years the *Nationale Vereniging van Geluidsdragende Detaillisten* (*NVGD*, national association of sound recording retail traders) has issued so-called CD tokens, which can be exchanged for sound recording media at businesses affiliated to this branch organisation. Each affiliated business is able to order such tokens with the *NVGD*. The *NVGD* sends the token to a management/storage office, usually a bank, where the shopkeeper may purchase the tokens. Subsequently, the tokens are circulated by the shopkeeper at the purchase price, in the course of which nothing has been earned yet then. When spending the indicated countervalue, the token is collected and subsequently charged from the *NVGD* by the collecting shopkeeper. Subsequently, the *NVGD* pays the indicated countervalue of the token in due course, after deducting the above-mentioned administrative costs and destroys the used gift token. After this, the countervalue claim is submitted to the management office, while the management office deducts the administrative costs incurred by them. This procedure is not only laborious and time-consuming but also, as a result, the shopkeeper will be less inclined to accept the gift token in case the spending value is lower than the countervalue of the token.

A transaction card of the kind mentioned in the opening paragraph avoids these drawbacks. Because the monetary value of such a card is stored in an electronic memory in a way compatible with an existing electronic payment system, the card can be used without any problem in principle for any random spending, while the amount is simply debited from the balance of the card with the integrated circuit and credited to the bank account of the shopkeeper. The costs charged for making use of the electronic payment system are negligible, or at least relatively low, compared to the administrative costs which were thus far charged for conventional transaction cards. After spending, the card balance is available for another purchase.

Examples of transaction cards usable for such purposes, whether based on a intelligent integrated circuit or just a magnetic strip containing monetary information, are described in UK Patent Application 2.067.467, US patent 5.440.108, German Utility Model 29512208 and Patent Abstracts of Japan, vol. 096, no. 009, 30.09.96. Although some of these cards are in fact equipped with an electronic circuit, their application is so far restricted to merely a smart replacement of a conventional gift token intended for direct spending purposes for goods and the like.

It is the aim of the present invention to extend the usability of a transaction card of the kind referred to in the opening paragraph to beyond this field of applications.

To this end a card of the type referred to in the opening paragraph is characterized in that the product or service comprises a reservation for an event, in that an amount due for said event is deductable electronically from said monetary value by means of said integrated circuit and in that reservation information may be loaded in said memory. While the card according to the invention may still be used as a transaction card for direct purchasing purposes, it may also be used for events, e.g. pop festivals, theatre performances, sports games, etc.. The transaction card according to the invention may, for that matter, be supplemented with any corresponding reservation. To this end, again preferably in an electronic way, contact is made with the booking agency and the amount due is debited from the transaction card and the acquired reservation is loaded into the memory of the card. The user may enter the places desired by him, if and as far as they are still available. Thus, the card serves as an access ticket for the event concerned. In case of private events, the reservation is to be entered or shown together with a membership card, e.g. a season ticket/club ticket with football matches, before the reservation can be executed. Such a reservation procedure may also be adopted outside the framework of a pure transaction card system, making use of your own chip-card with a monetary value, e.g. the above-mentioned *chip-knip*.

In the following embodiment, the use of a transaction card according to the invention will be explained in more detail and the corresponding advantages will be explained. A corresponding drawing will be referred to in which:

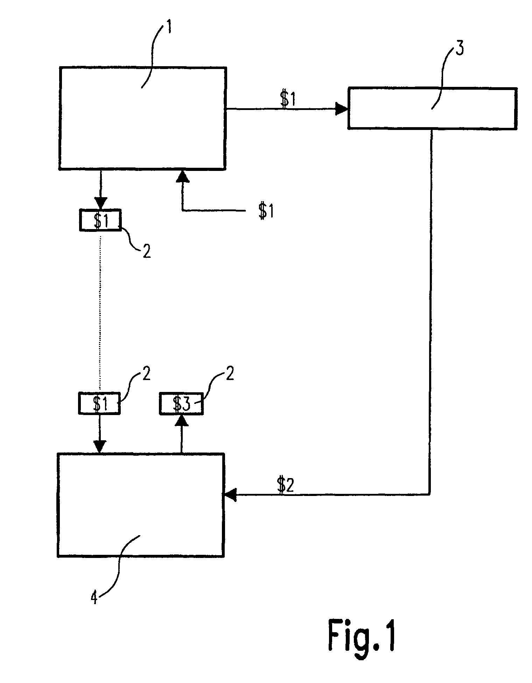

Figure 1 shows a schematic view of a transaction card system making use of an embodiment of the transaction card according to the invention.
As referred to above, the drawing is purely schematic. Corresponding parts in the figures are indicated with the same reference number.

With the transaction card according to the invention, the administrative procedure for issuing the transaction cards is considerably easier to realise than the above-mentioned existing procedure for CD tokens, which will be explained on the basis of figure 1. The entire system is based on a transaction card according to the invention comprising a card-shaped body 2, provided with an appropriate print containing an integrated circuit in it or on it. The integrated circuit comprises an electronic memory which can be read out and programmed, intended to store, at least temporarily, the desired countervalue on it, in a way compatible with an existing electronic payment system.

An issue point 1 has unloaded transaction cards at its disposal, as a result of which it is hardly sensitive to, among others, theft. This issue point 1 may be arranged specifically as such, however, affiliated companies/shops may also function as such.

If a consumer asks for a transaction card, card 2 is loaded for the desired amount $ 1.- and sold. With this, the options may be limited to accepted amounts formed by an entire multiple of NLG 25.-, however, in itself this may also differ, if necessary. Loading is realised by means of the appropriate equipment at the issue point 1. In addition to cash payment, settlement may also be realised electronically, for the issued transaction card is compatible with an existing system for electronic payment transactions. In a special embodiment, the integrated circuit of card 2 comprises means in order to co-operate by the medium of adequate peripheral equipment with a second card-shaped body containing an electronic memory with a certain loaded currency value in order to debit the value concerned from it. Such a second card comprises, for example, a so-called *chip-knip*: an electronic purse which is issued by joint banks and which is loaded to a certain amount in advance.

The amount $ 1 of transaction card 2 is charged to an account of the issue point credited to a central bank account 3, which is realised fully automatically. If so desired, a *chip-knip* from issue point 1 may be debited for the amount $ 1.- concerned instead.

The consumer is now able to give away the just acquired, loaded transaction card 2 as a gift. The person receiving transaction card 2 from him, may spend it on the purpose indicated on the card. This may be a sound recording medium in case of a CD/record token, a stay in a hotel in case of a hotel token, a dinner in case of a dinner token, etc. Again and again, the card is spent at a desired corresponding affiliated company for a specific product respectively specific service. The indicated purpose may, however, also concern a specific place, e.g. a certain department store, shopping centre or shopkeepers' organisation, in which case the purchased service or product is generally optional.

Contrary to the conventional transaction cards, the transaction card receiver according to the invention is free to choose the amount to spend. Thus, he/she is able to use the transaction card for a spending $ 2 with a certain company 4. This spending is debited in an electronic way from the current balance of transaction card 2, in such a way that the disposable balance $ 3 remains. This amount may be spent with the same company, however, it may also be spent with another company. After or if necessary, during/as a result of the transaction, the amount spent $ 2 is debited from the central bank account 3 electronically, and after deducting a small amount for processing costs, which is credited to an account kept by company 4. The above-mentioned mutations of the central bank account 3 may, for that matter, also be executed non-electronically in writing, using acceptable collection procedures. However, the processing time will be longer in that case. Apart from these kind of transactions, whether or not electronic, in principle, the transaction card system according to the invention does not require administration, which results in substantial costs savings compared to a conventional transaction card system.

Although in principle, the transaction card according to the invention entails higher production costs compared to the conventional paper transaction card, it is, however, also cost-saving in this respect, since a used transaction card according to the invention, contrary to its conventional counterpart, is suitable for recycling. To this end, card 2 with a remaining balance $ 3 is collected below a certain amount, after settlement of this remainder $ 3, and subsequently put at the disposal of issue point 1 for recycling purposes. In addition, the physical stock of transaction cards according to the invention may be limited, since every card is suitable for the entire gamut of countervalues and it is therefore not required to keep a collection of cards for every countervalue.

Although the invention has been explained and described in more detail above by means of a specific embodiment, it may be obvious to any person that the invention is in no way limited to the given example. On the contrary, the invention offers a broad range of application options and ditto embodiment or appearance forms which can all be applied within the framework of the invention by the average craftsman, without requiring an inventive contribution from him. Thus, the gift chip card according to the invention may, for example, also be marketed in a loaded design and the card, partly because of the fact that the costs incurred are lower, is more versatile than the fields for which a transaction card system has been applied thus far. These may involve the nearly unlimited field of retail trade, especially builder's merchants and do-it-yourself stores, toy stores, garden centres and the department stores referred to earlier, record shops and book shops, also including, however, transport companies and especially taxi and aircraft companies, as well as theatres, cinemas, sports stadiums, hotels, restaurants and other hotel and restaurant facilities.

Time after time, the invention provides both the consumer and the entrepreneur with significant advantages due to the fact that any random amount can be spent by means of the transaction card respectively no laborious charge procedures and costs are involved and settlement takes place almost immediately.

In case of a spending for events, e.g. pop festivals, theatre performances, sports games, etc., the transaction card according to the invention may, for that matter, be supplemented with any corresponding reservation. To this end, again preferably in an electronic way, contact is made with the booking agency and the amount due is debited from the transaction card and the acquired reservation is loaded into the memory of the card. The user may enter the places desired by him, if and as far as they are still available. Thus, the card serves as an access ticket for the event concerned. In case of private events, the reservation is to be entered or shown together with a membership card, e.g. a season ticket/club ticket with football matches, before the reservation can be executed. Such a reservation procedure may also be adopted outside the framework of a transaction card system, making use of your own chip-card with a currency countervalue, e.g. the above-mentioned *chip-knip*.

## Claims

1. Transaction card representing a certain monetary purchasing value which can be exchanged for an optional product or service comprising a card-shaped body with an integrated circuit having a memory which can be read out electronically and programmed, intended, at least temporarily, to store the above-mentioned monetary value on it, in a way compatible with an existing electronic payment system
**characterized in that** the product or service comprises a reservation for an event, **in that** an amount due for said event is deductable electronically from said monetary value by means of said integrated circuit and **in that** reservation information may be loaded in said memory.

2. Transaction according to claim 1, **characterised in that** the integrated circuit comprises means in order to co-operate by the medium of adequate peripheral equipment with a second card-shaped body with an electronic memory, in which a certain monetary value is loaded in order to debit the value concerned.

## Patentansprüche

1. Transaktionskarte, die einen bestimmten Geldkaufwert repräsentiert, der als Entgelt für ein gewünschtes Produkt oder eine gewünschte Dienstleistung verwendet werden kann, mit einem kartenförmigen Körper mit einem integrierten Schaltkreis, der einen Speicher aufweist, der elektronisch ausgelesen und programmiert werden kann, der dazu bestimmt ist, zumindest zeitweilig den oben genannten Geldwert auf mit einem vorhandenen elektronischen Zahlungssystem kompatible Weise darauf zu speichern, **dadurch gekennzeichnet, dass** das Produkt oder die Dienstleistung eine Reservierung für ein Ereignis umfasst, dass ein für das Ereignis fälliger Betrag elektronisch von dem Geldwert mittels des integrierten Schaltkreises abziehbar ist, und dass Reservierungsinformationen in den Speicher geladen werden können.

2. Transaktionskarte nach Anspruch 1, **dadurch gekennzeichnet, dass** der integrierte Schaltkreis Mittel aufweist, um vermittels entsprechender peripherer Ausstattung mit einem zweiten kartenförmigen Körper mit einem elektronischen Speicher zusammenzuwirken, in dem ein bestimmter Geldwert geladen ist, um den betreffenden Wert abzubuchen.

## Revendications

1. Carte de transaction représentant une certaine valeur monétaire d'achat qui peut être échangée contre un produit ou service facultatif comprenant un corps en forme de carte avec un circuit intégré comportant une mémoire qui peut être lue de manière électronique et programmée, destinée, au moins temporairement, à stocker ladite valeur monétaire d'une manière compatible avec un système de paiement électronique existant, **caractérisée en ce que** le produit ou service comprend une réservation pour un événement, **en ce qu'**une quantité due pour cet événement est déductible de manière électronique de ladite valeur monétaire au moyen dudit circuit intégré et **en ce que** des informations de réservation peuvent être chargées dans ladite mémoire.

2. Carte de transaction selon la revendication 1, **caractérisée en ce que** le circuit intégré comprend un moyen afin de coopérer par le biais d'un équipement périphérique adéquat avec un second corps en forme de carte muni d'une mémoire électronique, dans lequel une certaine valeur monétaire est chargée afin de débiter la valeur concernée.
